Europäisches Patentamt

European Patent Office

Office européen des brevets

(19)

(11) **EP 0 692 752 B1**

(12) **EUROPÄISCHE PATENTSCHRIFT**

(45) Veröffentlichungstag und Bekanntmachung des Hinweises auf die Patenterteilung:
**22.10.1997 Patentblatt 1997/43**

(51) Int Cl.⁶: **G05B 13/04**

(21) Anmeldenummer: **95106693.5**

(22) Anmeldetag: **04.05.1995**

(54) **Schaltungsanordnung eines Reglers mit nachgiebiger Rückführung**

Circuit arrangement for a controller with yielding feedback

Circuit pour un régulateur à retroaction flexible

(84) Benannte Vertragsstaaten:
**DE FR GB IT**

(30) Priorität: **16.07.1994 DE 4425188**

(43) Veröffentlichungstag der Anmeldung:
**17.01.1996 Patentblatt 1996/03**

(60) Teilanmeldung: **96120302.3**

(73) Patentinhaber: **ABB PATENT GmbH**
**68309 Mannheim (DE)**

(72) Erfinder:
• **Hanus, Borivoy**
**CZ-190 00 Prag 1 (CZ)**
• **Hernych, Milos**
**CZ-Liberec 6 460 06 (CZ)**
• **Sindelár, Rudolf**
**D-69494 Hirschberg (DE)**

(74) Vertreter: **Rupprecht, Klaus, Dipl.-Ing. et al**
**c/o ABB Patent GmbH,**
**Postfach 10 03 51**
**68128 Mannheim (DE)**

(56) Entgegenhaltungen:
• PROCEEDINGS OF THE 8TH TRIENNIAL WORLD CONGRESS OF THE INTERNATIONAL FEDERATION OF AUTOMATIC CONTROL, Bd. 1, August 1981 KYOTO JP, Seiten 109-115, K. WATANABE ET AL. 'Modified Smith predictor control for multivariable systems with multiple delays subject to unmeasurable disturbances'
• PROCEEDINGS OF THE AMERICAN CONTROL CONFERENCE, BOSTON, JUNE 26-28, 1991, Bd. 3, 26.Juni 1991 INSTITUTE OF ELECTRICAL AND ELECTRONICS ENGINEERS, Seiten 2800-2805, XP 000269108 LAU E K C ET AL 'EXPERIMENTAL EVALUATION OF A KALMAN FILTER BASED MULTISTEP ADAPTIVE PREDICTIVE CONTROLLER'
• PROCEEDINGS OF THE AMERICAN CONTROL CONFERENCE, BOSTON, JUNE 26-28, 1991, Bd. 2, 26.Juni 1991 INSTITUTE OF ELECTRICAL AND ELECTRONICS ENGINEERS, Seiten 1790-1795, XP 000272079 EATON J W ET AL 'MODEL PREDICTIVE CONTROL OF CHEMICAL PROCESSES'

Bemerkungen:
Teilanmeldung 96120302.3 eingereicht am 18/12/96.

**Beschreibung**

Die Erfindung bezieht sich auf eine Schaltungsanordnung eines Reglers mit nachgiebiger Rückführung nach dem Oberbegriff des Anspruchs 1 bzw. des Anspruchs 2.

Eine ähnliche Schaltungsanordnung oder Regelkreisstruktur ist aus atp-Automatisierungstechnische Praxis 36 (1994) 1, Seiten 46 bis 52, insbesondere Bild 3 als Smith-Prädiktor bekannt. In dieser Veröffentlichung sind auch die generellen Vorteile eines Smith-Prädiktors gegenüber Standardreglern bei Regelstrecken mit dominierender Totzeit angesprochen, sowie einige Möglichkeiten zur Erweiterung der Schaltung, um ein besseres Störverhalten - jedoch nur bei meßbaren Störgrößen - zu erzielen.

Aus Proceedings of the 8th Triennial World Congress of the International Federation of Automatic Control, Bd. 1, August 1981 Kyoto JP, Seiten 109 bis 115, K. Watanabe et al. "Modified Smith predictor control for multivariable systems with multiple delays subject to unmeasureable disturbances" ist ein modifizierter Smith-Regler für mehrdimensionale Regelstrecken n-ter Ordnung mit unterschiedlichen Totzeiten bekannt. Die Modifikation besteht in der Verwendung eines Blockes M (s), dessen Zeitverhalten mit einer Übertragungsmatrix der Dimension (m x m) gegeben ist. Sein Eingangssignal stellt die Differenz der Regelgrößen und der Ausgangssignale zweiten Regelstrecken-Zustandsmodells, d.h. mit Totzeit dar. Neben dem Ausgang des ersten Regelstrecken-Zustandsmodells, d.h. ohne Totzeit wird der Ausgang des Blocks M(s) am Eingang des Reglers aufgeschaltet. Es wird im allgemeinen als erstes Regelstrecken-Zustandsmodell ein Modell höherer als erster Ordnung verwendet. Hierdurch entsteht ein Instabilitätsproblem des inneren Regelkreises. Der daher nicht als PI, sondern als PID-Typ ausgeführt werden muß. Wenn nicht sogar eine Adaptation der Reglerparameter erfolgen muß, damit die notwendige Robustheit erzielt wird. Anhand einer Polvorgabe der Übertragungsfunktion der Matrix M(s) soll eine Beschleunigung des Regelprozesses beim Eintritt einer Regelgröße-Störung erzielt werden. Es werden im Aufsatz nur asymptotisch stabile Regelstrecken vorausgesetzt.

Im Aufsatz Proceedings of the American Control Conference, Boston US, Bd. 3, 26. Juni 1991, Seiten 2800 bis 2805, E.K.C. Lau et al "Experimental evaluation of a kalman filter based multistep adaptive predictive controller" wird ein adaptiver Regler in der Z-Transformation beschrieben, der auf einem modifizierten Kalman-Filter basiert. Die Filterkoeffiezienten werden so eingestellt, daß der Prädiktionsfehler bei dem vorhandenen Rauschen der Regelgröße und bei der sich ändernden Totzeit minimal wird. Es wird gezeigt, daß der Prädiktionsfehler bei der minimalen Varianz zwar größer gegenüber dem optimalen Fall ist, aber der Verlauf der ganzen Varianz dabei flacher ist, wodurch eine größere Robustheit erreicht wird. Das Verhalten bei astatischen und instabilen Regelstrecken wird nicht erwähnt.

Die Regelgüte hängt weitgehend von der Übereinstimmung des Streckenmodells im Regler mit dem tatsächlichen Streckenverhalten ab. Die bekannte modifizierte Smith-Schaltung läßt sich problemlos verwenden bei stabilen Regelstrecken, d. h. bei aperiodischen (S-) Regelstrecken mit oder ohne Totzeit und beliebiger Ordnung oder bei schwach schwingenden Regelstrecken mit Ausgleich.

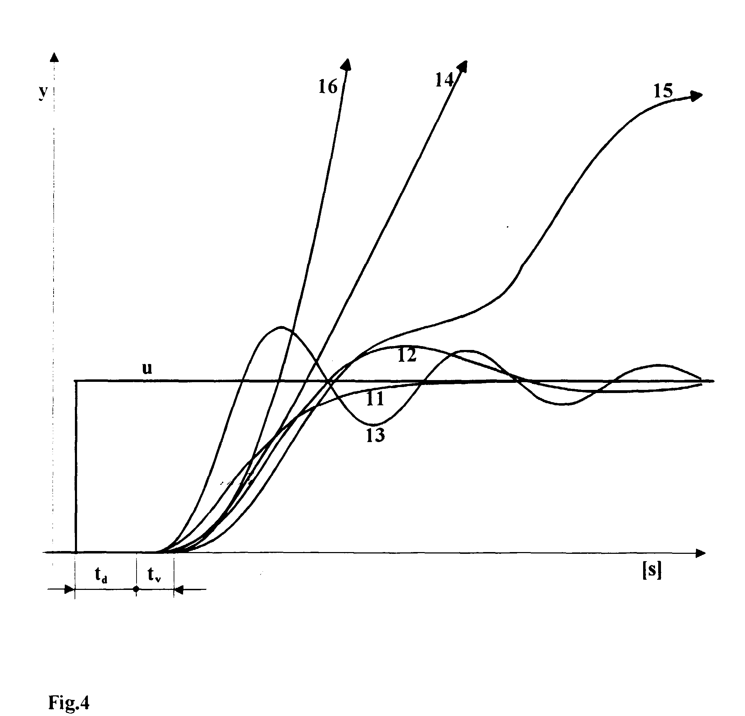

In Fig. 4 ist das Stellverhalten unterschiedlicher Regelstrecken dargestellt, auf die vor- und nachstehend Bezug genommen wird. Dabei sind zeitliche Verläufe 11 bis 16 der Regelgröße y auf eine sprungförmige Änderung der Stellgröße u aufgetragen. Mit $t_d$ ist die Totzeit, mit $t_v$ ist die Verzugszeit bezeichnet.

Mit 11 ist ein typischer Verlauf einer aperiodischen (oder S-)Regelstrecke bezeichnet, die auch als "stationäre" Regelstrecke "mit Ausgleich" bezeichnet wird. Mit 12 ist eine schwach schwingende Regelstrecke mit Ausgleich, mit 13 eine stark schwingende Regelstrecke mit Ausgleich bezeichnet. 14 gilt für verzögerte astatische und 15 für außerdem noch schwingende Regelstrecken, d.h. ohne Ausgleich. Der Verlauf 16 gilt für eine instabile Regelstrecke.

Der Erfindung liegt die Aufgabe zugrunde, eine Schaltungsanordnung mit nachgiebigem Regler anzugeben, die auch bei stark schwingenden, bei astatischen oder sogar bei instabilen Regelstrecken ein gutes Regelverhalten aufweist.

Diese Aufgabe wird bei einer Schaltungsanordnung nach dem Oberbegriff der unabhängigen Ansprüche 1 bis 2 jeweils durch die kennzeichnenden Merkmale gelöst. Vorteilhafte Ausgestaltungen sind in weiteren Ansprüchen angegeben.

Vorteile der erfindungsgemäßen Schaltungsanordnungen bestehen darin, daß die Stabilität des Regelverhaltens auch bei instabilen und stark schwingenden Regelstrecken höherer Ordnung erzielt wird. Stör- und Führungsverhalten sind optimal. Es läßt sich eine Regelgüte erreichen, die wesentlich besser ist als bei einem konventionellen PID-Regler, und fast so gut wie bei einem Zustandsregler mit vollständiger Rückführung der Zustandsgrößen erreichbar ist. Planung und Inbetriebnahme sind einfach und problemlos durchführbar.

Eine ausführliche Beschreibung der Erfindung und ihrer Ausgestaltungsmöglichkeiten erfolgt nachstehend anhand der Zeichnungsfiguren.

Es zeigen:

Fig. 1      die Schaltungsanordnung eines Reglers mit nachgiebiger Rückführung,

Fig. 2      erfindungsgemäße Schaltungsanordnung mit Anordnung von getrennten Regelbereichen für Sollwert- und Störgrößen-Änderungen,

Fig. 3      Abwandlung der Schaltungsanordnung nach Fig. 2,

Fig. 4      Stellverhalten unterschiedlicher Regelstrecken,

Fig. 5a, 6a, 7a  Simulationsergebnisse für unterschiedliche Regelstrecken im Fall der bekannten "Smith"-Schaltung, und

Fig. 5b, 6b, 7b  Simulationsergebnisse für unterschiedliche Regelstrecken bei Verwendung einer erfindungsgemäßen Schaltung.

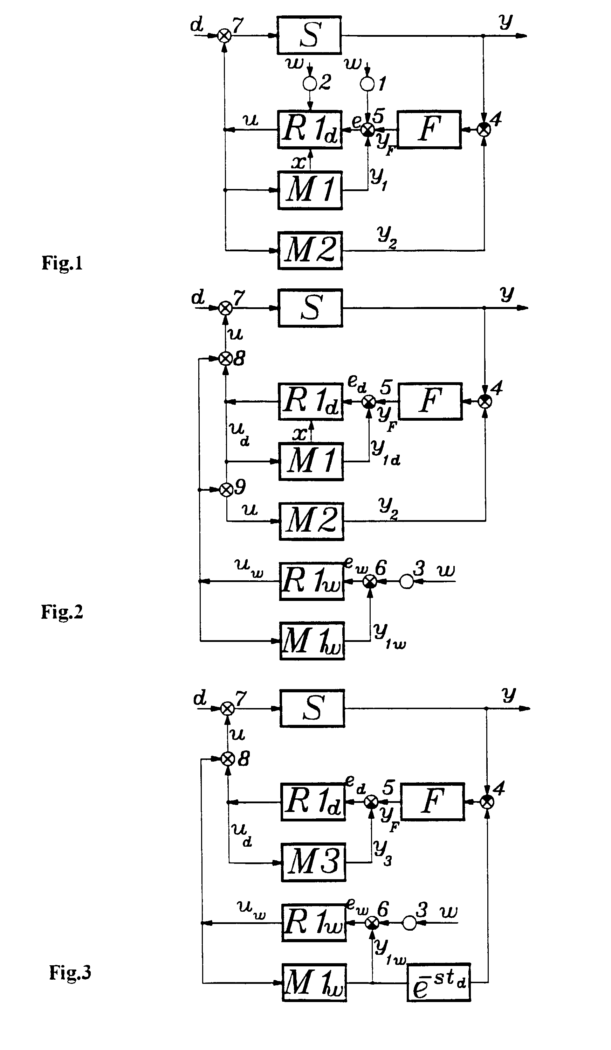

Fig. 1 zeigt eine Regelkreisstruktur, die als solche aus der genannten Veröffentlichung Watanabe et al. bekannt ist und von der die Erfindung ausgeht. Von der gewöhnlichen Smith-Schaltung unterscheidet sie sich durch eine Anordnung eines Filters F in der Rückführrung.

Dargestellt ist eine Regelstrecke S, an deren Ausgang die Regelgröße y abgegriffen und zu einer ersten Subtraktionsstelle 4 geführt ist.

Ein erster Regler R1d liefert eine Stellgröße u, die von einer ersten Additionsstelle 7 mit einer - nicht meßbaren - Störgröße d verknüpft wird zur Bildung des Eingangssignals der Regelstrecke S.

Der erste Regler R1d kann ein konventioneller Regler, z.B. PI- oder PID-Regler sein.

Die Stellgröße u ist auf eine negative Rückführung mit einem ersten Modell M1 und eine positive Rückführrung mit einem zweiten Modell M2 geführt.

Das Ausgangssignal $y_1$ des ersten Modells M1 wird an einer zweiten Subtraktionsstelle 5 vom Ausgangssignal des Filters F subtrahiert. Ausgangssignal der zweiten Subtraktionsstelle 5 ist die Regelabweichung e, die Eingangssignal des ersten Reglers R1d ist.

Eine Führungsgröße bzw. ein Sollwert w kann entweder an einer ersten Stelle 1 der zweiten Subtraktionsstelle 5 aufgeschaltet werden, oder an einer zweiten Stelle 2 auf einen weiteren Eingang des Reglers R1d.

Bei einer Zuführung des Sollwerts w über die zweite Stelle 2 wird der Sollwert w additiv auf die Eingänge des P-Kanals und der restlichen Kanäle des Reglers aufgeschaltet. Die Verstärkung für den gegebenenfalls vorhandenen I-Kanal ist identisch mit der Verstärkung des Ausgangssignals der Subtraktionsstelle 5. Die Verstärkung für die restlichen Kanäle kann beliebig sein.

Das erste Modell M1 kann außerdem zustandsvariable Signale x zur Einstellung des ersten Reglers R1d liefern. Vom Ausgangssignal $y_2$ des zweiten Modells M2 wird an der ersten Subtraktionsstelle 4 die Regelgröße y subtrahiert. Das Differenzsignal $y_2 - y$ ist dem Filter F zugeführt.

Die Synthese der Schaltung nach Fig. 1 und die Wahl der Funktionen ihrer Komponenten basiert auf nachstehenden Überlegungen.

Wenn die Regelstrecke S und ihr Approximationsmodell - realisiert durch die Modelle M1 und M2 - ähnliche Übertragungsfunktionen haben, dann sind - im Falle des gleichen Verlaufes des Eintrittsignals - auch die Regelvorgänge ähnlich. Wenn also der Regelablauf mit dem Modell optimal ist, ist er mit der Regelstrecke suboptimal und nähert sich dem optimalen Regelablauf umso mehr, je besser die Übereinstimmung im Verhalten der Regelstrecke und des Modells wird.

Folgende Approximation wird gewählt:

$$M_1(s) \cdot e^{-st_d} \cong S(s) \tag{1}$$

wobei

S(s)  die Übertragungsfunktion der Regelstrecke,

$M_1(s) \cdot e^{-st_d}$  die Übertragungsfunktion des Approximationsmodells, und

$t_d$  die Totzeit sind.

Bei aperiodischen (S-)Regelstrecken beliebiger Ordnung und bei schwach schwingenden mit Ausgleich wird M1 mit erster Ordnung gewählt und bei stark schwingenden Regelstrecken, bei Regelstrecken ohne Ausgleich (d. h. astatischen) und bei instabilen Regelstrecken sind die Pole der Übertragungsfunktion S(s), die dem schwingenden, astatischen oder instabilen Teil von S(s) entsprechen, in die Übertragungsfunktion M1(s) zu übernehmen. Durch die gewählte approximative Relation (1) wird eine nachgiebige Rückführung des Reglers R1d mittels zweier Modelle möglich: Sie besteht in einer negativen Rückführung, dargestellt durch das Modell M1 mit der Übertragungsfunktion M1(s) und einer positiven Rückführung, die durch das Modell M2 mit folgender Übertragungsfunktion (möglichst genau) realisiert wird:

$$M_2(s) \cong S(s)$$

Die negative Rückführung des Systems S wird durch die positive Rückführung mit dem Modell M2 zum großen Teil kompensiert, so daß die Dynamik des geschlossenen Regelkreises nur durch die Glieder M1 und R1d bestimmt wird. Der Regler R1d wird - mindestens vorläufig - nur nach dem Modell M1 eingestellt und kann deshalb nur von einer niedrigeren Ordnung sein. Für eine statische Regelstrecke S, also mit Ausgleich, ist der Regler R1d nur vom Typ PI. Der Ausgang der Regelstrecke S, also die Regelgröße y entspricht dann etwa dem um die Totzeit $t_d$ verzögerten Ausgang des Modells M1 (siehe Relation (1)). Die Ausgangssignale $y_1$ und $y_2$ der Modelle M1 und M2 sind im stationären Zustand identisch und dadurch wird das resultierende Ausgangssignal der nachgiebigen Rückführung Null (bei einer statischen Regelstrecke S müssen die Verstärkungsfaktoren von M1, M2 identisch sein).

Die Parameter des Reglers R1d können entweder für die Änderung des Sollwerts w (gewöhnlich Sprunggröße), oder für die Störung d am Eingang der Regelstrecke S optimal eingestellt werden. Das Signal des Sollwertes w wird zum Eingang des Reglers R1d geführt. Bei den optimalen Reglerparametern wird der Regelvorgang am Ausgang des Modells M1 optimal und dadurch auch optimal - mindestens suboptimal - auf dem Ausgang der Regelstrecke S. Bei der Einstellung des Reglers R1d auf das Störverhalten d, wobei d nicht dafür gemessen wird, entspricht die Differenz $(y_2-y)$ zwischen dem Ausgang der Regelstrecke S und dem Ausgang des Modells M2 stets der Reaktion der Regelstrecke S auf die Störung d, weil die korrigierende Wirkung der Stellgröße des Reglers R1d auf die Regelgröße y durch die Übertragungen über die Regelstrecke S und das zweite Modell M2 kompensiert wird. Wenn man zunächst unterstellt, es sei kein Filter F vorhanden, dann wird durch die Aufschaltung des Signals am Reglereingang R1d die Störwirkung auf die Regelgröße y wie eine Änderung des Sollwerts w, d.h. mit einer Verzögerung mit der Totzeit $t_d$ ausgeregelt. Deshalb wird das entstehende Differenzsignal $[y_2(t)-y(t)]$ zu dem Regler R1d durch ein Filter F mit Vorhaltverhalten zugeführt, womit das Differenzsignal sich auf den Wert $[y_2(t+t_d)-y(t+t_d)]$ ausregeln wird, den er sonst erst nach der Verzögerungszeit $t_d$ erhalten würde. Ein solches Ausgangssignal des Filters F wird durch die Summe des Differenzsignales $[y_2(t)-y(t)]$ mit dessen gewichteten zeitlichen Ableitungen der m-ten Ordnung gebildet, wobei m kleiner oder gleich der Ordnung des Approximationsmodells M1 ist. Mit Hilfe des Filters F wird die Ausregelung der Störgröße d am Eintritt der Strecke S beschleunigt und gleichzeitig wird das stationäre Verhalten der nachgiebigen Rückführung (im Beharrungszustand Ausgang Null), insbesondere im Fall einer Regelstrecke ohne Ausgleich bzw. einer instabilen Regelstrecke S, gesichert nicht beeinträchtigt. Alle Ungenauigkeiten in den Modellen M1 und M2 gegenüber der Regelstrecke S werden wie eine Störung d in der Regelstrecke ausgeregelt ohne eine Dauerregelabweichung. Das gleiche Ergebnis läßt sich auch durch die daraus resultierende stabile Übertragungsfunktion mit deren immer gegen Null konvergierenden Ausgangssignal erreichen, d. h. durch eine nachgiebige Rückführung mit nur einem Modell, wie beispielsweise als drittes Modell M3 in Fig. 3 dargestellt ist.

Fig. 2 zeigt eine erfindungsgemäße Schaltungsanordnung, die es ermöglicht, die beiden Änderungen der Führungsgröße w und der Störungsgröße d gleichzeitig und voneinander unabhängig am besten auszuregeln. Die Schaltungsanordnung weist zwei Bereiche mit jeweils einem Regler und einem Modell auf.

Mit dem ersten Bereich, gebildet durch einen zweiten Regler R1w und ein weiteres Modell M1w, wird eine Vorwärtssteuerung (feed forward) hinsichtlich einer Änderung des über eine dritte Stelle 3 eingegebenen Sollwerts w erzielt. Vom Sollwert w wird an einer dritten Subtraktionsstelle 6 das Ausgangssignal $y_1w$ des weiteren Modells M1w subtrahiert zur Bildung der Regelabweichung $e_w$ für den zweiten Regler R1w.

Der zweite Bereich enthält den ersten Regler R1d und das erste Modell M1 zur Ausregelung einer Störgröße d. Das Modell M2 ist in beiden Bereichen wirksam, da die Ausgangssignale $u_d$, $u_w$ beider Regler R1d, R1w an einer dritten Additionsstelle 9 summiert werden zur Bildung der Stellgröße u, die auf das zweite Modell M2 geführt ist. Die Stellgröße u ist außerdem an einer zweiten Additionsstelle 8 gebildet.

Fig. 3 zeigt eine weitere Schaltungsanordnung mit zwei Regelbereichen. Die nachgiebige Rückführung des ersten Reglers $R1_d$ enthält in diesem Fall nur ein drittes Modell M3 mit stabiler Übertragungsfunktion, anstelle des ersten Modells M1 und zweiten Modells M2 mit Filter F. Das Ausgangssignal $y_3$ des dritten Modells M3 wird an der zweiten Subtraktionsstelle 5 vom Ausgangssignal $y_F$ des Filters F subtrahiert. Das Ausgangssignal $y_1w$ des weiteren Modells M1w ist außer zur dritten Subtraktionsstelle 6 über eine Totzeitglied $e^{-st_d}$ zur ersten Subtraktionsstelle 4 geführt.

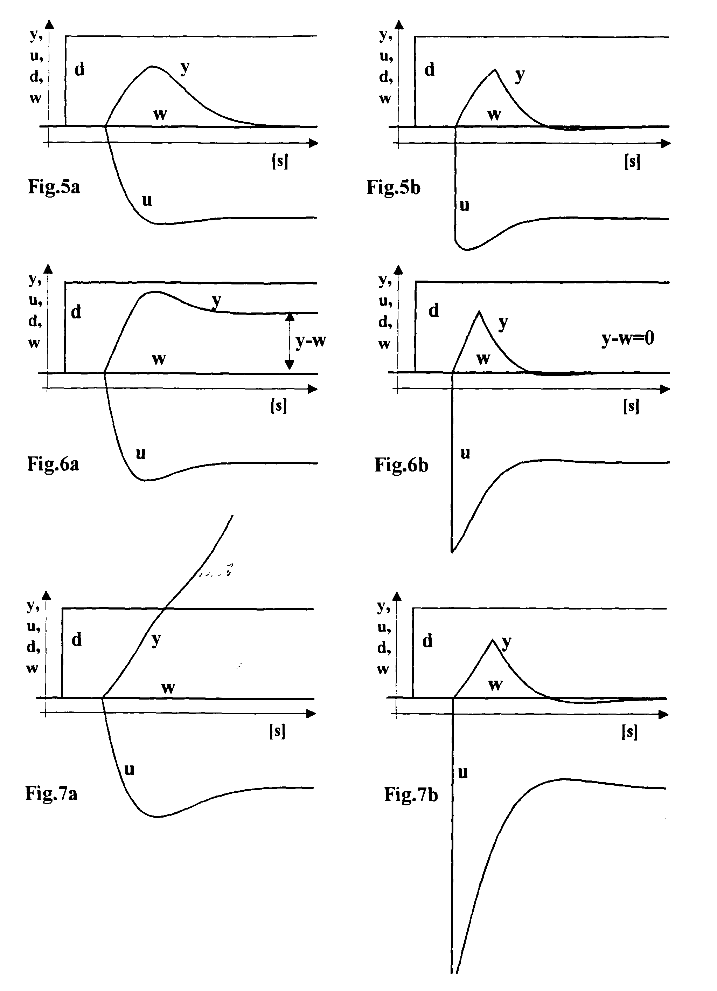

In den Fig. 5 bis 7 sind Simulationsergebnisse dargestellt, anhand denen aufgezeigt werden soll, welche Verbesserungen im Regelverhalten bei unterschiedlichen Regelstrecken mit erfindungsgemäßen Schaltungsanordnungen zu erreichen sind. Alle zugrundegelegten Regelstrecken weisen eine Totzeit von 30s auf. Untersucht wurde das Störverhalten bezüglich der Störgröße d, die sprungförmig verändert wurde. In üblicher Weise ist die Stellgröße mit u, die Regelgröße mit y und der Sollwert mit w bezeichnet.

Die Fig. 5a, 6a und 7a zeigen Simulationsergebnisse für eine eingangs als Smith-Prädiktor bezeichnete Schaltung. Die Fig. 5b, 6b und 7b zeigen jeweils korrespondierende Ergebnisse für eine erfindungsgemäße Schaltung nach Fig. 1.

Die Fig. 5a und 5b zeigen Simulationsergebnisse für den Fall einer "stabilen Regelstrecke", also von dem in Fig. 4 mit den Kurven 11 und 12 dargestellten Typ. Fig. 5a ist zu entnehmen, daß die zugrundegelegte "Smith"-Schaltung in diesem Fall zu akzeptablen Ergebnissen führt. Fig. 5b zeigt, daß die erfindungsgemäße Schaltung (also mit Filter F) ein besseres Ergebnis aufweist, d.h. eine schnellere Ausregelung der Regelgröße y auf den Sollwert w bewirkt. In beiden Fällen wird somit y=w erreicht, wie angestrebt.

Die Fig. 6a und 6b beziehen sich auf eine "astatische Regelstrecke" (vergl. Fig. 4, Kurven 14 und 15). Dabei ist Fig. 6a zu entnehmen, daß sich bei der "Smith"-Schaltung zwar der Beharrungszustand einstellt, jedoch eine Dauerregelabweichung bleibt, also y≠w ist. Die Schaltung führt zwar zu einer stabilen Regelung, ist aber wegen der Dauerregelabweichung nur eingeschränkt einsetzbar, Fig. 6b zeigt dagegen für die erfindungsgemäße Schaltung eine wesentlich bessere Regelgüte ohne Dauerregelabweichung (y=w).

Die Fig. 7a und 7b zeigen schließlich Ergebnisse für eine "instabile Regelstrecke" (vergl. Fig. 4, Kurve 16). Wie Fig. 7a zeigt, ist die "Smith"-Schaltung für diesen Fall nicht anwendbar, weil die Regelgröße y keinen Beharrungszustand erreicht. Fig. 7b zeigt dagegen auch für eine solche Regelstrecke ein exzellentes Ergebnis, nämlich eine stabile Regelung, wobei die Wirkung der Störgröße d schnell und ohne Dauerregelabweichung (y=w) ausgeregelt wird.

Bezugszeichenliste

1 erste Stelle (für Sollwertzuführung)
2 zweite Stelle (für Sollwertzuführung)
3 dritte Stelle (für Sollwertzuführung)
4 erste Subtraktionsstelle
5 zweite Subtraktionsstelle
6 dritte Subtraktionsstelle
7 erste Additionsstelle
8 zweite Additionsstelle
9 dritte Additionsstelle
10 vierte Additionsstelle
11 bis 16 Regelgrößenverlauf unterschiedlicher Regelstrecken
17 Vorzeichenumkehr

F Filter
I Integrator
M1 erstes Modell
M2 zweites Modell
M3 drittes Modell
M1w weiteres Modell
R1d erster Regler
R1w zweiter Regler
S Regelstrecke

d Störgröße
$e_d$ Regelabweichung
u Stellgröße
w Sollwert oder Führungsgröße
x zustandsvariables Signal
y Regelgröße
$y_1$ Ausgangssignal des ersten Modells
$y_2$ Ausgangssignal des zweiten Modells
$y_3$ Ausgangssignal des dritten Modells
$y_{1w}$ Ausgangssignal des weiteren Modells
yF Ausgangssignal des Filters
h Koeffizienten zur Gewichtung des Eingangssignals des Filters
k Koeffizienten zur Gewichtung der Zustandsvariablen
n Anzahl der Zustandsvariablen

**Patentansprüche**

1. Schaltungsanordnung,

- die eine Regelstrecke (S) mit einem Ausgangssignal (y) und
- einen ersten kontinuierlichen oder diskreten, linearen oder nichtlinearen Regler (R1d) mit nachgiebiger Rückführung der Stellgröße (u) auf den Reglereingang aufweist, wobei

a) die Rückführung ein erstes Modell (M1) mit Polen in seiner Übertragungsfunktion zur Rückführung des Ausgangssignals ($u_d$) des ersten Reglers (R1d) enthält, dessen Ausgangssignal ($y_{1d}$) mit negativer Wirkung rückgeführt ist und wobei die Übertragungsfunktion des ersten Modells (M1) der M1-Teil der approximierenden Übertragungsfunktion $M_1(s) \cdot e^{-st_d} \cong S(s)$ ist, S(s) die exakte Übertragungsfunktion der Regelstrecke (S) und $t_d$ die Totzeit ist,
b) die Rückführung außerdem ein zweites Modell (M2) enthält, dessen Ausgangssignal ($y_2$) mit positiver Wirkung rückgeführt ist, und wobei die Übertragungsfunktion (M2) des zweiten Modells (M2) die beste Approximation der Übertragungsfunktion (S(s)) ist, so daß im Beharrungszustand des Regelkreises (S, R1d) die Summe der negativen und der positiven Rückführung Null ist, und wobei außerdem
c) in der Rückführung ein Filter (F) angeordnet ist,

- dessen Eingangssignal das Differenzsignal ($y_2$-y) zwischen dem Ausgangssignal ($y_2$) des zweiten Modells (M2) und dem Ausgangssignal (y) der Regelstrecke (S) ist, und
- dessen Ausgangssignal ($y_F$) mit dem Ausgangssignal ($y_{1d}$) des ersten Modells (M1) verknüpft ist zur Bildung einer Regelabweichung (ed),

dadurch gekennzeichnet, daß

d) ein zweiter Regler (R1w) mit einem weiteren Modell (M1w) in einer negativen Rückführung angeordnet ist, dessen eingangsseitige Regelabweichung ($e_w$) die Differenz (w-$y_{1w}$) zwischen dem Ausgangssignal ($y_{1w}$) des weiteren Modells (M1w) und einem Sollwert (w) ist, und dessen Ausgangssignal ($u_w$) zu dem Eingang des weiteren Modells (M1w) geführt ist, mit dem Ausgangssignal ($u_d$) des ersten Reglers (R1d) zur Bildung der Stellgröße (u) für die Regelstrecke (S) und für das zweite Modell (M2) summiert ist,
e) die Regelabweichung ($e_d$) des ersten Reglers (R1d) allein als Differenz des Ausgangssignals ($y_{1d}$) des ersten Modells (M1) und des Ausgangssignals ($y_F$) des Filters (F) gebildet ist, und
f) Eingangssignal des ersten Modells (M1) das Ausgangssignal ($u_d$) des ersten Reglers (R1d) ist. (Fig. 2)

2. Schaltungsanordnung,

- die eine Regelstrecke (S) mit einem Ausgangssignal (y) und

- einen kontinuierlichen oder diskreten, linearen oder nichtlinearen Regler (R1d) mit nachgiebiger Rückführung des Ausgangssignals ($u_d$) des ersten Reglers (R1d) auf den Reglereingang aufweist,

<u>dadurch gekennzeichnet, daß</u>

a) ein Modell (M3) in der Rückführung des Ausgangssignals ($u_d$) des ersten Reglers (R1d) auf seinen Eingang angeordnet ist, das eine stabile Übertragungsfunktion aufweist,

b) ein zweiter Regler (R1w) mit einem weiteren Modell (M1w) in einer negativen Rückführung angeordnet ist, dessen eingangsseitige Regelabweichung ($e_w$) die Differenz ($w-y_{1w}$) zwischen dem Ausgangssignal ($y_{1w}$) des weiteren Modells (M1w) und dem Sollwert (w) ist, und dessen Ausgangssignal ($u_w$) zu dem Eingang des weiteren Modells geführt ist, und mit dem Ausgangssignal ($u_d$) des ersten Reglers (R1d) zur Bildung der Stellgröße (u) summiert ist, und

c) das Ausgangssignal ($y_{1w}$) des weiteren Modells ($M_{1w}$) außerdem über ein Totzeitglied ($e^{-st_d}$) und ein Filter (F) geführt ist, wobei das Eingangssignal des Filters das Differenzsignal zwischen dem Ausgangssignal des Totzeitgliedes und dem Ausgangssignal (y) der Regelstrecke (S) ist und das Ausgangssignal des Filters mit dem Ausgangssignal des Modells (M3) verknüpft ist zur Bildung der Regelabweichung ($e_d$) für den ersten Regler verwendet ist. (Fig. 3)

3. Schaltungsanordnung nach einem der Ansprüche 1 oder 2, dadurch gekennzeichnet, daß das Ausgangssignal ($y_F$) des Filters (F) jeweils durch die Summe seines Eingangssignales mit dessen gewichteten zeitlichen Ableitungen der m-ten Ordnung gebildet ist, wobei m kleiner oder gleich der Ordnung des Modells (M1, M3) in der Rückführung des Ausgangssignals ($u_d$) des ersten Reglers (R1d) ist.

4. Schaltungsanordnung nach Anspruch 1, dadurch gekennzeichnet, daß die astatischen und instabilen Pole der Regelstrecke (S) in den Modellen (M1, M2) durch statische Übertragungsfunktionen mit Ausgleich approximiert sind, um eine gute Übereinstimmung der Sprungantworten in deren Anfangsbereich zu erzielen.

**Claims**

1. Circuit arrangement,

- which has a control path (S) with an output signal (y) and

- a first continuous or discrete, linear or non-linear regulator (R1d) having flexible feedback for the manipulated variable (u) to the regulator input,

a) the feedback containing a first model (M1) with poles in its transfer function for feeding back the output signal (ud) of the first regulator (R1d) and whose output signal (y1d) is fed back with a negative effect, the transfer function of the first model (M1) of the $M_1$ part of the approximating transfer function being $M_1(s) \cdot e^{-st_d} \cong S(s)$, S (s) being the exact transfer function of the control path (S) and $t_d$ being the dead time,

b) the feedback also containing a second model (M2), whose output signal (y2) is fed back with a positive effect, the transfer function ($M_2$) of the second model (M2) being the best approximation to the transfer function (S(s)), so that, when the control loop (S, R1d) is in the steady state, the sum of the negative feedback and the positive feedback is zero, and, in addition,

c) a filter (F) being arranged in the feedback,

- whose input signal is the difference signal (y2-y) between the output signal (y2) of the second model (M2) and the output signal (y) of the control path (S), and

- whose output signal (yF) is linked to the output signal (y1d) of the first model (M1) to form a control error (ed),

<u>characterized in that</u>

d) a second regulator (R1w) having a further model (M1w) is arranged in a negative feedback path, whose control error ($e_w$) on the input side is the difference ($w-y_{1w}$) between the output signal ($y_{1w}$) of the further model (M1w) and a nominal value (w), and whose output signal ($u_w$) is fed to the input of the further model (M1w) and is added to the output signal ($u_d$) of the first regulator (R1d) to form the manipulated variable (u) for the control path (S) and for the second model (M2),

e) the control error ($e_d$) of the first regulator (R1d) is formed just as the difference between the output signal ($y_{1d}$) of the first model (M1) and the output signal ($y_F$) of the filter (F), and

f) [lacuna] input signal of the first model (M1) is the output signal ($u_d$) of the first regulator (R1d). (Fig. 2)

2. Circuit arrangement,

- which has a control path (S) having an output signal (y) and
- a continuous or discrete, linear or non-linear regulator (R1d) having flexible feedback of the output signal (ud) of the first regulator (Rld) to the regulator input,

<u>characterized in that</u>

a) a model (M3), which has a stable transfer function, is arranged in the feedback path of the output signal ($u_d$) of the first regulator (Rld) to its input,

b) a second regulator (Rlw) having a further model (Mlw) is arranged in a negative feedback path, whose control error ($e_w$) on the input side is the difference ($w$-$y_{1w}$) between the output signal ($y_{1w}$) of the further model (M1w) and the nominal value (w), and whose output signal ($u_w$) is fed to the input of the further model and is added to the output signal ($u_d$) of the first regulator (Rld) to form the manipulated variable (u), and

c) the output signal (y1w) of the further model (M1w) is also fed via a delay element ($e^{-st}d$) and a filter (F), the input signal of the filter being the difference signal between the output signal of the delay element and the output signal (y) of the control path (S), and the output signal of the filter being linked to the output signal of the model (M3) to form the control error ($e_d$) for the first regulator. (Fig. 3)

3. Circuit arrangement according to either of Claims 1 and 2, characterized in that the output signal ($y_F$) of the filter (F) is in each case formed by the sum of its input signal and its weighted m-th order time derivatives, m being less than or equal to the order of the model (M1, M3) in the feedback path of the output signal ($u_d$) of the first regulator (R1d).

4. Circuit arrangement according to Claim 1, characterized in that the astatic and unstable poles of the control path (S) in the models (M1, M2) are approximated by static transfer functions with compensation, in order to achieve good correspondence within the initial region of step-function responses.

## Revendications

1. Agencement de circuit comportant

- un système asservi (S) avec un signal de sortie (y) et
- un premier régulateur continu ou discret, linéaire ou non linéaire, avec une boucle de rétro-action flexible de la variable réglante (u) sur l'entrée du régulateur,

a) la boucle de rétro-action contenant, dans sa fonction de transfert pour ramener signal de sortie (ud) du premier régulateur (R1d), un premier modèle (M1) avec des pôles, dont le signal de sortie (y1d) est ramené avec une action négative et la fonction de transfert du premier modèle (M1) étant le membre M1 de la fonction de transfert approchée M1(s) . $e^{-std} \cong S(s)$, S(s) étant la fonction de transfert exacte du système asservi (S) et $t_d$ le temps mort,

b) la boucle de rétro-action contenant en outre un deuxième modèle (M2) dont le signal de sortie (y2) est ramené avec une action positive et la fonction de transfert ($M_2$) du deuxième modèle (M2) étant la meilleure approximation de la fonction de transfert (S(s)), de sorte que dans l'état figé du circuit de régulation (S, R1d), la somme des rétroactions négative et positive est nulle et

c) un filtre (F) étant disposé dans la boucle de rétro-action,

- filtre dont le signal d'entrée est le signal différentiel (y2 - y) entre le signal de sortie (y2) du deuxième modèle (M2) et le signal de sortie (y) du système asservi (S) et
- dont le signal de sortie (yF) est combiné au signal de sortie (y1d) du premier modèle (M1) pour former un écart de réglage (ed),

caractérisé par le fait qu'un

d) deuxième régulateur (R1w) avec un modèle (M1w) supplémentaire est disposé dans une boucle de rétro-action négative, modèle dont l'écart de réglage ($e_w$) côté entrée est la différence (w - y1w) entre le signal de sortie (y1w) du modèle (M1w) supplémentaire et la valeur de consigne (w) et dont le signal de sortie ($u_w$) est ramené à l'une des entrées du modèle (M1w) supplémentaire et est ajouté au signal de sortie ($u_d$) du premier régulateur (R1d) pour former la variable réglante (u) pour le système asservi (S) et pour le deuxième modèle (M2, e) l'écart de réglage ($e_d$) du premier régulateur (R1d) est formé seul en tant que différence entre le signal de sortie (y1d) du premier modèle (M1) et le signal de sortie (yF) du filtre (F) et f) le signal d'entrée du premier modèle (M1) est le signal de sortie ($u_d$) du premier régulateur (R1d). (figure 2)

2. Agencement de circuit comportant

- un système asservi (S) avec un signal de sortie (y) et

- un régulateur (R1d) continu ou discret, linéaire ou non linéaire, avec une boucle de rétro-action flexible du signal de sortie (ud) du premier régulateur (R1d) sur l'entrée dudit régulateur (R1d),

caractérisé par le fait que

a) un modèle (M3) qui présente une fonction de transfert stable est disposé dans la boucle de rétro-action du signal de sortie ($u_d$) du premier régulateur (R1d),
b) un deuxième régulateur (R1w) avec un modèle (M1w) supplémentaire est disposé dans une boucle de rétro-action négative, régulateur dont l'écart de réglage ($c_w$) côté entrée est la différence (w - y1w) entre le signal de sortie (y1w) du modèle (M1w) supplémentaire et la consigne (w) et dont le signal de sortie ($u_w$) est ramené à l'entrée du modèle supplémentaire avec le signal de sortie ($u_d$) du premier régulateur (R1d) pour former la variable réglante (u) et
c) le signal de sortie (y1w) du modèle (M1w) supplémentaire est envoyé dans un élément de retard ($e^{-std}$) et un filtre (F), le signal d'entrée du filtre étant le signal différentiel entre le signal de sortie de l'élément de retard et le signal de sortie (y) du système asservi (S) et le signal de sortie du filtre étant combiné avec le signal de sortie du modèle (M3) pour former l'écart de réglage ($e_d$) pour le premier régulateur (figure 3).

3. Agencement de circuit selon la revendication 1 ou 2, caractérisé par le fait que le signal de sortie (yF) du filtre (F) est formé par la somme de son signal d'entrée et de ses dérivées en fonctions du temps, pondérées, d'ordre m, m étant inférieur ou égal à l'ordre du premier modèle (M1) dans la boucle de rétro-action du signal de sortie (ud) du premier régulateur (R1d).

4. Agencement de circuit selon la revendication 1, caractérisé par le fait que les pôles astatiques et instables du système asservi (S) dans les modèles (M1, M2) sont approchés par des fonctions de transfert statiques afin d'obtenir une bonne concordance des réponses dans la phase de début.

Fig.1

Fig.2

Fig.3

Fig.4

Fig.5a

Fig.5b

Fig.6a

Fig.6b

Fig.7a

Fig.7b

11